# EUROPÄISCHE PATENTSCHRIFT

(11) **EP 0 887 536 B1**
(45) Veröffentlichungstag und Bekanntmachung des Hinweises auf die Patenterteilung: **02.01.2003**
(21) Anmeldenummer: 97810409.9
(22) Anmeldetag: 25.06.1997
(51) Int. Cl.: F02F 7/00, F16C 5/00, B23P 19/04

(54) **Verfahren zur Inspektion einer Lagerschale und Verfahren zum Ausbau einer Schubstange bei Grossdieselmotoren, Werkzeugsatz hierfür, sowie Grossdieselmotor mit eingebautem Werkzeugsatz**
Process for inspecting a bearing shell and method for removing a connecting rod from a big diesel engine and the tool and engine for doing same
Procédé pour l'inspection d'un palier et procédé pour le démontage d'une tige de piston d'un grand moteur diesel et outil et moteur pour l'exécution de ces procédés

(43) Veröffentlichungstag der Anmeldung: 30.12.1998
(73) Patentinhaber: Wärtsilä Schweiz AG, 8401 Winterthur (CH)
(72) Erfinder: Manhart, Christoph, 8405 Winterthur (CH); Frei, Bruno, 8500 Frauenfeld (CH)
(74) Vertreter: Heinen, Detlef

(56) Entgegenhaltungen:
- CH-A- 317 237
- FR-A- 1 204 073
- US-A- 2 404 835
- US-A- 4 729 249
- PATENT ABSTRACTS OF JAPAN vol. 013, no. 327 (M-854), 24.Juli 1989 & JP 01 110836 A (NIIGATA ENG CO LTD), 27.April 1989,
- PATENT ABSTRACTS OF JAPAN vol. 004, no. 128 (M-031), 9.September 1980 & JP 55 084819 A (KAWASAKI HEAVY IND LTD), 26.Juni 1980,

## Beschreibung

Die Erfindung betrifft ein Verfahren zur Inspektion einer Lagerschale, die im Lagerboden eines Kreuzkopf-Gelenks eines Grossdieselmotors angeordnet ist, ein Verfahren zum Ausbau einer Schubstange eines Grossdieselmotors, einen Werkzeugsatz hierfür, sowie einen Grossdieselmotor mit einem eingebauten derartigen Werkzeugsatz.

Bei bekannten Grossdieselmotoren, wie sie beispielsweise in Schiffen zum Einsatz kommen, wird die geradlinige Bewegung einer Kolbenstange in eine nicht geradlinige Bewegung einer unterhalb der Kolbenstange angeordneten Schubstange umgesetzt. Dieses Umsetzen der geradlinigen Bewegung der Kolbenstange in die nicht geradlinige Bewegung der Schubstange erfolgt typischerweise mittels eines Kreuzkopf-Gelenks. Die Schubstange ist an ihrem dem Kreuzkopf-Gelenk abgewandten Ende mit der Kurbelwelle verbunden, sodass durch die Aufwärts- und Abwärtsbewegung des Kolbens und damit der Kolbenstange über die Schubstange letztlich die Kurbelwelle angetrieben wird.

Ein derartiges Kreuzkopf-Gelenk umfasst typischerweise einen Lagerdeckel und einen Lagerboden, die miteinander lösbar verbunden sind (z.B. mit Hilfe sogenannter Dehnbolzen). Lagerdeckel und Lagerboden umgreifen einen Lagerzapfen, um den herum sie schwenkbar sind. Im Lagerboden ist eine separate Lagerschale eingesetzt, die bei der Abwärtsbewegung der Kolbenstange verschiedenartigen Belastungen ausgesetzt ist.

Derartige Grossdieselmotoren bedürfen von Zeit zu Zeit einer Wartung. Dabei wird in der Regel zumindest die Lagerschale im Lagerboden des Kreuzkopf-Gelenks inspiziert, da diese im Betrieb doch recht erheblichen Belastungen ausgesetzt ist. Gegebenenfalls muss die Lagerschale ausgetauscht werden. Oftmals muss auch die Schubstange ausgebaut werden, damit der Innenraum des Motors für weitere Wartungsarbeiten besser zugänglich ist.

Dokument FR 1 204 073 A offenbart eine Anordnung zur Stützung eines Kolbens eines Verbrennungsmotors während der Montage.

In Dokument JP 55084819 (Patent Abstracts of Japan) wird eine Methode zur Inspektion des Kurbelwellengehäuses eines Dieselmotors beschrieben sowie eine Vorrichtung zur Fixierung einer Kolbenstange. Die Dokumente aus dem Stand der Technik enthalten jedoch keinen Hinweis zur Inspektion einer Lagerschale im Lagerboden eines Kreuzkopf-Gelenkes.

Die Inspektion und der Austausch der Lagerschale wie auch der Ausbau der Schubstange bei Grossdieselmotoren erfordert typischerweise, dass bei ruhendem Motor mindestens zwei Personen des Service-Personals in den Innenraum des Motors hinein steigen. Die Verbindung von Lagerdeckel und Lagerboden wird gelöst, was z.B. derart erfolgt, dass entsprechende Muttern auf den Dehnbolzen gelöst werden, sodass die Dehnbolzen nach dem Lösen der Muttern ohne diese in den entsprechenden Bohrungen angeordnet sind. Die Schubstange wird im oberen Umkehrpunkt der Bahn der Schubstange mit Hilfe von zwei Flaschenzügen an entsprechenden Aufhängepunkten gesichert. Hierzu müssen die beiden Personen des Service-Personals in den Motor hineinsteigen. Anschliessend wird die Kurbelwelle mit Hilfe der Schaltmaschine - das ist eine Hilfsmaschine zum langsamen Fortschalten bzw. Bewegen der Kurbelwelle - gedreht. Der Lagerdeckel wird dabei in seiner Position mittels z.B. vier Haltezapfen festgehalten. Dies hat zur Folge, dass der Lagerboden mit der einliegenden Lagerschale zusammen mit der Schubstange um den Lagerzapfen geschwenkt wird. Gleichzeitig wird der Lagerboden vom Lagerdeckel wegbewegt. Der Lagerdeckel dreht sich aber zunächst so lange um den Lagerzapfen mit, wie die Dehnbolzen noch in die Bohrungen im Lagerdeckel hineinragen. Nach und nach gleiten jedoch die Dehnbolzen (durch die gleichzeitige Abwärtsbewegung der Schubstange) aus den Bohrungen im Lagerdeckel heraus, bis sie vollständig herausgeglitten sind. Gleichzeitig mit der Bewegung der Kurbelwelle und damit der Schubstange müssen die beiden Personen, die Flaschenzüge bedienen, entsprechend der Bewegung der Schubstange "Kette" nachgeben (und dies in unterschiedlichem Masse, je nachdem, auf welcher Seite der Schubstange die betreffende Person des Service-Personals positioniert ist).

Klemmt nun ein Flaschenzug und kann die Schaltmaschine nicht augenblicklich gestoppt werden, so können die Ketten der Flaschenzüge reissen. Die Folge ist, dass entweder die Dehnbolzen in den Bohrungen im Lagerdeckel verkanten können, was eine Beschädigung des Gewindes der Dehnbolzen zur Folge haben kann, oder bei bereits aus den Bohrungen herausgeglittenen Dehnbolzen kann die Schubstange zur Seite fallen. Dies kann im einfachsten Fall dazu führen, dass die Dehnbolzen gegen den Lagerzapfen stossen und entweder das Gewinde der Dehnbolzen oder die Oberfläche des Lagerzapfens oder beides erheblich beschädigt wird. Viel schlimmer aber ist der Fall, bei dem der Lagerboden bereits so weit vom Lagerdeckel entfernt ist, dass die Schubstange ungehindert zur Seite fallen kann. In diesem Fall kann dies für das Service-Personal absolut schwerwiegende Folgen haben. Sinngemäss gelten diese Betrachtungen auch für den Ausbau der Schubstange, da dies im wesentlichen in gleicher Weise erfolgt.

Es ist daher eine Aufgabe der Erfindung, ein Verfahren und entsprechende Mittel vorzuschlagen, die eine Inspektion und/oder einen Austausch der Lagerschale bzw. einen Ausbau der Schubstange ermöglichen, wobei aber die oben erwähnten Nachteile hinsichtlich der Beschädigung einzelner Teile entfallen und wobei vor allen Dingen das Sicherheitsrisiko für das Service-Personal minimiert bzw. eliminiert ist.

Diese Aufgabe wird durch ein Verfahren, wie es in dem jeweiligen unabhängigen Patentanspruch charakterisiert ist, gelöst, wie auch durch einen entsprechenden Werkzeugsatz zum Einbau in solchen Grossdieselmotoren. Schliesslich betrifft die Erfindung noch einen Grossdieselmotor, in welchem die entsprechenden Mittel eingebaut sind.

Erfindungsgemäss wird also vor dem Wegbewegen der Schubstange und damit vor dem Wegbewegen des Lagerbodens vom Lagerdeckel an der Schubstange ein Schlitten befestigt und an einem feststehenden Teil des Motors werden Führungsmittel befestigt. Der Schlitten und die Führungsmittel werden jeweils so zueinander angeordnet befestigt, dass beim Wegbewegen der Schubstange und damit beim Wegbewegen des Lagerbodens vom Lagerdeckel der an der Schubstange befestigte Schlitten sich an den am feststehenden Teil des Motors befestigten Führungsmitteln entlang bewegt und sich auf ihnen abstützt. Auf diese Weise werden die beim herkömmlichen Verfahren genannten Nachteile vermieden. Insbesondere wird eine Beschädigung einzelner Teile vermieden, da sich der Schlitten zu jeder Zeit auf den Führungsmitteln abstützt, sodass die Schubstange nicht zur Seite fallen kann. Ausserdem muss beim Wegbewegen der Schubstange und damit des Lagerbodens vom Lagerdeckel kein Service-Personal im Innenraum des Motors zugegen sein, im Prinzip kann die Kurbelwelle in eine Position gedreht werden, in der dann anschliessend bei ruhender Kurbelwelle das Service-Personal in den Innenraum einsteigen und die Lagerschale inspizieren kann. Es ist aber ebenso denkbar, dass das Service-Personal nach dem Befestigen der Führungsmittel und des Schlittens - zu diesem Zweck muss das Service-Personal ja notwendigerweise in den Innenraum des Motors einsteigen - bei der anschliessenden Bewegung der Kurbelwelle und damit beim Wegbewegen der Schubstange und damit des Lagerbodens vom Lagerdeckel im Innenraum des Motors zugegen bleibt, da ja ein Verkippen der Schubstange und damit eine Gefährdung des Service-Personals ausgeschlossen ist.

Bei einer vorteilhaften Variante des erfindungsgemässen Verfahrens wird die Verbindung von Lagerdeckel und Lagerboden in der tiefsten Position (unterer Umkehrpunkt) der Schubstange gelöst. Anschliessend wird die Schubstange in ihre höchste Position (oberer Umkehrpunkt) bewegt, und schliesslich werden in dieser höchsten Position der Schubstange die Führungsmittel an dem feststehenden Teil des Motors und der Schlitten an der Schubstange befestigt. Das Lösen der Verbindung von Lagerdeckel und Lagerboden im unteren Umkehrpunkt ist insofern von Vorteil, als in dieser Position das Kreuzkopf-Gelenk (Lager) relativ gut zugänglich ist und bei der Aufwärtsbewegung der Schubstange die Dehnbolzen nicht aus den Bohrungen im Lagerdeckel herausgleiten können.

Weiterhin kann gemäss einer Variante des erfindungsgemässen Verfahrens eine bei der Inspektion als abgenutzt oder defekt eingestufte Lagerschale anschliessend ausgetauscht werden.

Das erfindungsgemässe Verfahren zum Ausbau der Schubstange entspricht im wesentlichen dem erfindungsgemässen Verfahren zur Inspektion der Lagerschale, wobei die Schubstange auf einer von den Führungsmitteln definierten Bahn geführt wird, bis das Ende dieser von den Führungsmitteln definierten Bahn erreicht ist (was übrigens typischerweise auch bei dem erfindungsgemässen Verfahren zur Inspektion bzw. zum Austausch der Lagerschale der Fall ist). Beim Erreichen des Endes dieser Bahn wird die Bewegung der Schubstange unterbrochen und in dieser Position werden Haltemittel (z.B. ein Flaschenzug) an der Schubstange befestigt. Anschliessend wird der Schlitten von der Schubstange entfernt (dazu wird die Schubstange mit Hilfe des Flaschenzugs von den Führungsmitteln abgehoben), und die Schubstange wird mit Hilfe der Haltemittel in eine für den Ausbau erforderliche Position abgelassen und ausgebaut. Die Vorteile entsprechen den bereits bei der Erläuterung des erfindungsgemässen Verfahrens zur Inspektion bzw. zum Austausch der Lagerschale genannten Vorteilen. Die Haltemittel (z.B. ein Flaschenzug) zum Ablassen der Schubstange werden so angebracht, dass das Service-Personal auf der Seite der Schubstange steht, in welche die Schubstange nicht kippt, sodass kein Sicherheitsrisiko für das Service-Personal besteht.

Ein weiterer Aspekt der vorliegenden Erfindung zur Lösung der genannten Aufgabe betrifft einen Werkzeugsatz für den Einbau in Grossdieselmotoren bei deren Wartung, insbesondere zur Erleichterung der Inspektion einer Lagerschale im Lagerboden eines Kreuzkopf-Gelenks und/oder zur Erleichterung des Ausbaus einer Schubstange des Motors. Der Werkzeugsatz umfasst zwei Führungs- bzw. Stützelemente, die beim Einbau an einem feststehenden Teil des Motors befestigt werden und jeweils eine genau definierte, rampenartig ansteigende Fläche und eine daran anschliessende Fläche in Form eines Plateaus aufweisen. Ferner umfasst der erfindungsgemässe Werkzeugsatz einen Schlitten, der beim Einbau an der Schubstange befestigt wird, wobei die Führungs- bzw. Stützelemente und der Schlitten nach dem Einbau so zueinander angeordnet sind, dass bei gelöster Verbindung von Lagerdeckel und Lagerboden des Kreuzkopf-Gelenks beim Wegbewegen der Schubstange und damit beim Wegbewegen des Lagerbodens vom Lagerdeckel der an der Schubstange befestigte Schlitten sich zunächst entlang der genau definierten rampenartigen Fläche und anschliessend entlang des Plateaus der Führungs- bzw. Stützelemente bewegt und sich dabei darauf abstützt.

Schliesslich betrifft ein weiterer Aspekt der vorliegenden Erfindung einen Grossdieselmotor, bei dem an der Schubstange eine Befestigungseinrichtung für einen Schlitten und an einem feststehenden Teil des Motors Befestigungseinrichtungen für Führungsmittel derart vorgesehen sind, dass nach dem Lösen der Verbindung von Lagerdeckel und Lagerboden und bei befestigtem Schlitten und bei befestigten Führungsmitteln der Schlitten beim Wegbewegen der Schubstange und damit des Lagerbodens vom Lagerdeckel sich an den Führungsmitteln entlang bewegt und sich dabei darauf abstützt.

Bei einer vorteilhaften Weiterbildung dieses Grossdieselmotors ist an der Schubstange mindestens eine weitere Einrichtung zum Befestigen von Haltemitteln (z.B. für den genannten Flaschenzug für den Ausbau der Schubstange) vorgesehen.

Im folgenden wird die Erfindung anhand der Zeichnung näher erläutert. Es zeigen, teilweise in schematischer Darstellung und/oder im Schnitt:
- Fig. 1: ein Ausführungsbeispiel einer Schubstange mit einem Lager eines Kreuzkopf-Gelenks,
- Fig. 2: einen Ausschnitt aus einem Grossdieselmotor mit einem Kreuzkopf-Gelenk,
- Fig. 3: ein Ausführungsbeispiel eines Werkzeugsatzes zum Einbau in einen Grossdieselmotor,
- Fig. 4: einen Längsschnitt durch ein Führungselement des Werkzeugsatzes gemäss Fig. 3,
- Fig. 5: eine Ansicht eines Seitenblechs des Führungselements,
- Fig. 6: eine Ansicht des Rückwandblechs des Führungselements,
- Fig. 7: eine Seitenansicht des Vorderwandblechs des Führungselements mit der Fläche zur Führung des Schlittens
und
- Fig. 8: den Haltebolzen zum Befestigen des Führungselements an einem feststehenden Teil des Motors.

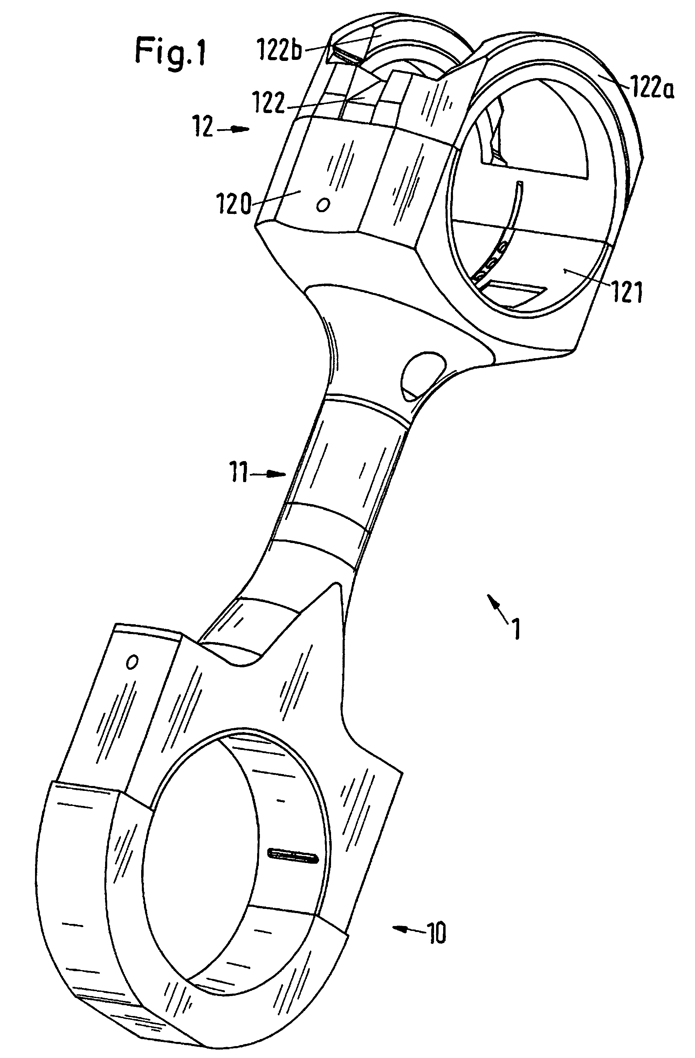

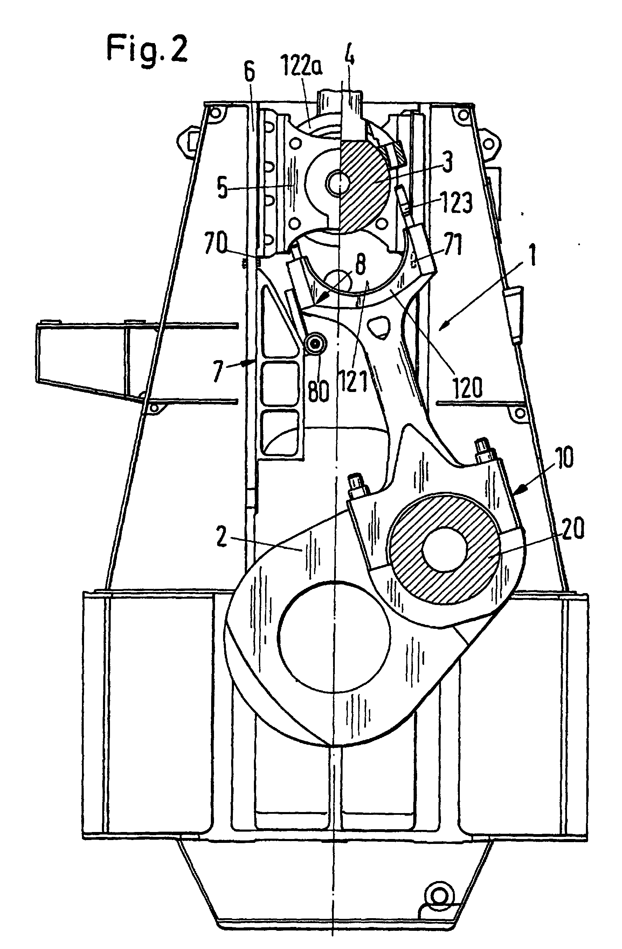

In Fig. 1 ist ein Ausführungsbeispiel einer Schubstange 1 eines Grossdieselmotors dargestellt. Man erkennt, dass die Schubstange ein unteres Lager 10 umfasst, welches im eingebauten Zustand (Fig. 2) einen Lagerzapfen 20 einer Kurbelwelle 2 umgreift. Von dem unteren Lager 10 erstreckt sich ein Schaft 11 zu einem oberen Lager 12. Dieses obere Lager 12 ist Teil eines Kreuzkopf-Gelenks und umfasst einen Lagerboden 120 mit einer in diesem Lagerboden einliegenden Lagerschale 121, sowie einen Lagerdeckel 122. Der Lagerdeckel 122 ist mit dem Lagerboden 120 lösbar verbunden und in verbundenem Zustand hält der Lagerdeckel 122 die Lagerschale 121 in der gezeigten Position. Der Lagerdeckel 122 umfasst zwei Bügel 122a und 122b, sodass im eingebauten Zustand (Fig.2) das Lager 12 einen Lagerzapfen 3 des Kreuzkopf-Gelenks umgreift und (im eingebauten Zustand) um diesen Lagerzapfen 3 herum schwenkbar ist.

Fig. 2 zeigt einen Ausschnitt (quasi das "Kurbelgehäuse") aus einem Grossdieselmotor, aus welchem zu erkennen ist, dass zwischen den Bügeln 122a und 122b (Fig. 1) eine Kolbenstange 4 durchgeführt ist, die mit dem Lagerzapfen 3 lösbar verbunden ist. Zu diesem Zweck kann der Lagerzapfen 3 (Fig. 2) auf seiner der Kolbenstange 4 zugewandten Seite zwischen den Bügeln 122a und 122b (Fig.1) eine Abflachung aufweisen, auf der die Kolbenstange 4, die an ihrem unteren Ende ebenfalls mit einem flachen Anschlussflansch versehen ist, aufgesetzt ist und dort auch mit dem Lagerzapfen 3 lösbar verbunden ist. Im Bereich der Bügel 122a und 122b (Fig. 1) ist der Lagerzapfen 3 nach wie vor rund ausgebildet, sodass die Bügel 122a und 122b um den Lagerzapfen 3 herum schwenkbar sind.

Ferner erkennt man in Fig. 2 (in der linken Hälfte) einen Führungsschlitten 5, der entlang von Führungsschienen 6 aufwärts und abwärts bewegbar ist. Dieser Führungsschlitten 5 ist mit dem Lagerzapfen 3 starr verbunden. Jenseits des Lagerzapfens 3 ist noch ein weiterer derartiger Führungsschlitten vorgesehen, der jedoch in Fig. 2 nur schlecht zu erkennen ist. Mit Hilfe der Führungsschlitten 5, des Lagerzapfens 3 und des Lagers 12, die gemeinsam das Kreuzkopf-Gelenk bilden, kann die geradlinige (vertikale) Aufwärts- und Abwärtsbewegung der Kolbenstange 4 in eine nicht geradlinige Bewegung der Schubstange 1 umgesetzt werden. Über die Verbindung der Schubstange 1 mit der Kurbelwelle 2 wird diese bei einer Aufwärts- und Abwärtsbewegung des Kolbens (und damit der Kolbenstange 4) angetrieben.

Wie bereits eingangs erläutert, muss von Zeit zu Zeit die Lagerschale 121 im Lagerboden 120 inspiziert und gegebenenfalls ausgetauscht werden. Gelegentlich muss auch die gesamte Schubstange 1 ausgebaut werden. Beide Vorgänge werden im folgenden gemeinsam beschrieben, weil beides zu einem grossen Teil in gleicher Art und Weise erfolgt.

Um die Lagerschale 121 überhaupt inspizieren zu können, muss der Lagerboden 120 mit der darin einliegenden Lagerschale 121 vom Lagerdeckel 122 wegbewegt werden. Lagerboden 120 und Lagerdeckel 122 können mittels sogenannter Dehnbolzen 123 verbunden sein (diese Dehnbolzen haben ihren Namen daher, dass bei gedehnten Bolzen die Sicherung der Bolzen - z.B. mittels Muttern - erfolgt und damit die Dehnbolzen sich anschliessend geringfügig zusammenziehen und dabei für eine feste Verbindung von Lagerdeckel und Lagerboden sorgen).

Zum Wegbewegen des Lagerbodens 120 vom Lagerdeckel 122 wird zunächst die Verbindung von Lagerdeckel 122 und Lagerboden 120 gelöst (z.B. können die genannten Muttern entfernt werden). Dies kann beispielsweise dann erfolgen, wenn die Schubstange 1 ihren unteren Umkehrpunkt erreicht hat, weil im unteren Umkehrpunkt das Lager 12 besser zugänglich ist als im oberen Umkehrpunkt, und damit das Lösen der Muttern einfacher möglich ist. Grundsätzlich kann das Lösen der Verbindung aber auch im oberen Umkehrpunkt oder in einer anderen Position der Schubstange 1 erfolgen, es muss nur sichergestellt sein, dass die Schubstange 1 nach dem Lösen der Verbindung nicht in Abwärtsrichtung bewegt wird, bevor nicht eine Sicherung der Schubstange gegen seitliches Kippen erfolgt ist. Vorzugsweise wird die Schubstange nach dem Lösen der Verbindung von Lagerdeckel.122 und Lagerboden 120 in Aufwärtsrichtung bewegt, bis sie ihren oberen Umkehrpunkt erreicht.

Nach dem Lösen der Verbindung von Lagerdeckel 122 und Lagerboden 120 im unteren Umkehrpunkt wird also die Schubstange 1 mit Hilfe einer nicht dargestellten Schaltmaschine, die Kurbelwelle 2 langsam bewegt (weiterschaltet), aufwärts bewegt, bis sie ihren oberen Umkehrpunkt erreicht hat. In dieser Position wird die Schaltmaschine und damit die Schubstange 1 angehalten.

Nun werden an einem feststehenden Teil des Motors Führungsmittel auf einer Seite (in Fig. 2 auf der linken Seite) in Form von zwei Stützelementen 7 mit Hilfe von Bolzen 70 befestigt. In Fig. 2 ist eines dieser Stützelemente 7 zu erkennen. Weiterhin werden auf der anderen Seite (in Fig. 2 auf der rechten Seite) auf gleicher Höhe ebenfalls Bolzen 71 mit einem feststehenden Teil des Motors befestigt. Ausserdem wird am Lagerboden 120, also an der (bewegbaren) Schubstange 1, ein mit Rollen 80 versehener Schlitten 8 befestigt.

Nachdem sowohl die Stützelemente 7 wie auch der Schlitten befestigt worden sind, wird mittels der (nicht dargestellten) Schaltmaschine die Kurbelwelle 2 bewegt und die Schubstange 1 bewegt sich aus dem oberen Umkehrpunkt in Richtung auf den unteren Umkehrpunkt zu. Dabei gleitet zunächst der Führungsschlitten 5 (durch das Eigengewicht des Führungsschlittens und des Kolbens bedingt) entlang der Führungsschienen 6 solange abwärts, bis er auf den Bolzen 70 und 71 aufsteht. Dabei nimmt der Führungsschlitten 5 den Lagerzapfen 3 und die daran starr befestigte Kolbenstange 4 mit. Während dieser Abwärtsbewegung drehen sich Lagerdeckel 122 und Lagerboden 120 um den Lagerzapfen 3, da die Bewegung der Schubstange 1 ja keine geradlinige Bewegung ist.

Sitzt der Führungsschlitten 5 auf den (Gewinde-)Bolzen 70 und 71 auf, so beginnen die Dehnbolzen 123 langsam aus den Bohrungen im Lagerdeckel 122 herauszugleiten, da beim weiteren Abwärtsbewegen der Schubstange 1 der (bzw. die) Führungsschlitten 5 nun nicht mehr in Abwärtsrichtung folgen kann (bzw. können). Das Lager 12 verdreht sich weiterhin, solange noch die Dehnbolzen 123 in die Bohrungen im Lagerdeckel 122 hineinragen.

Sind die Dehnbolzen 123 vollständig aus den Bohrungen im Lagerdeckel 122 herausgeglitten, würde die Schubstange 1 nun zur Seite kippen können. Da aber der oben erwähnte Schlitten 8 sich mittels seiner Rollen 80 auf den Stützelementen 7 abstützt und an diesen entlang gleitet, kann die Schubstange 1 nicht zur Seite kippen.

Ist der Lagerboden 120 weit genug vom Lagerdeckel 122 entfernt, wird die Schaltmaschine angehalten und das Service-Personal kann die Lagerschale 121 inspizieren und gegebenenfalls austauschen. In den Fällen, in denen die Schubstange 1 ausgebaut werden soll oder muss (typischerweise gilt dies auch bei der Inspektion der Lagerschale), wird die Schaltmaschine so lange betätigt, bis die Rollen 80 des Schlittens 8 das untere Ende der Stützelemente 7 erreicht haben (z.B. bei einer in Bezug auf den oberen Umkehrpunkt um 90° gedrehten Kurbelwelle). Dann wird die Schaltmaschine angehalten und es wird z.B. ein Flaschenzug am Lagerboden 120 auf der anderen Seite, in Fig. 2 also auf der rechten Seite, zum Halten der Schubstange 1 angebracht. Dann wird die Schubstange 1 mit Hilfe der Flaschenzüge angehoben, sodass sich der Schlitten 8 nicht mehr auf den Stützelementen 7 abstützt und der Schlitten 8 wird von der Schubstange 1 entfernt. Während dieser Zeit muss die Schubstange über den zuvor angebrachten Flaschenzug gehalten werden, sie wird sodann zum Ausbau nach und nach abgelassen (in Fig. 2 nach links).

Für das Service-Personal besteht weder bei der Inspektion der Lagerschale 121 oder bei deren Austausch, noch beim Ausbau der Schubstange 1, ein Risiko. Die Stützelemente 7 werden vom Service-Personal dann angebracht, wenn die Schaltmaschine angehalten ist und sich die Schubstange 1 in ihrem oberen Umkehrpunkt befindet. Danach kann das Service-Personal im Innenraum des Motors bleiben oder ihn wieder verlassen. Bei der anschliessenden Abwärtsbewegung der Schubstange 1 besteht jedenfalls keine Gefahr für das Service-Personal, weil sich zu jeder Zeit die Rollen 80 des Schlittens 8 auf den Führungselementen 7 abstützen und somit die Schubstange 1 nicht kippen kann. Wenn die Rollen 80 des Schlittens 8 das Ende der Führungselemente 7 erreichen, wird die Schaltmaschine erneut angehalten. Das Service-Personal muss nun auf die andere Seite der Schubstange 1 wechseln, um den Flaschenzug am Lagerboden anzubringen und um anschliessend die Schubstange 1 zum Austausch ablassen zu können. Jedenfalls befindet sich auch in dieser Situation kein Service-Personal auf der Seite im Motorraum, in deren Richtung die Schubstange 1 schliesslich abgelassen wird. Beim Entfernen des Schlittens 8 befindet sich das Service-Personal zwar kurzfristig auf der Seite, in die Schubstange kippen kann, jedoch ist die Schubstange während dieser Zeit durch einen Flaschenzug gesichert und die Schaltmaschine steht still, sodass auch hier keine Gefahr für das Service-Personal besteht.

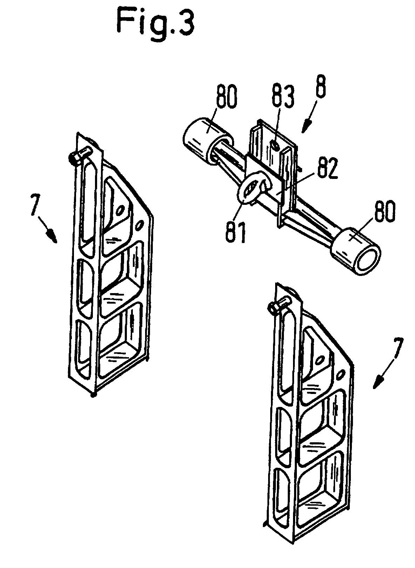

Anhand von Fig. 3 bis Fig. 8 wird im folgenden ein Ausführungsbeispiel eines Werkzeugsatzes beschrieben, wie er beispielsweise im vorstehend erläuterten Ausführungsbeispiel des Verfahrens zum Einsatz kommen kann. Der erfindungsgemässe Werkzeugsatz umfasst zwei Führungs- bzw. Stützelemente 7 und einen Schlitten 8. Der Schlitten 8 ist mit zwei Rollen 80 (Fig. 3) versehen, die bei eingebauten Stützelementen auf den Führungsflächen 72a dieser Stützelemente 7 entlanggleiten. Der Schlitten 8 kann mittels einer Ringschraube 81 am Lagerboden 120 (Fig. 2) befestigt werden. In Fig. 3 ist die Ringschraube 81 in eine Platte 82 eingeschraubt, die aber nur der Aufbewahrung der Ringschraube dient. Beim Befestigen des Schlittens 8 am Lagerboden 120 wird die Ringschraube durch die Öffnung 83 des Schlittens 8 durchgeführt und der Schlitten 8 auf diese Weise am Lagerboden 120 befestigt.

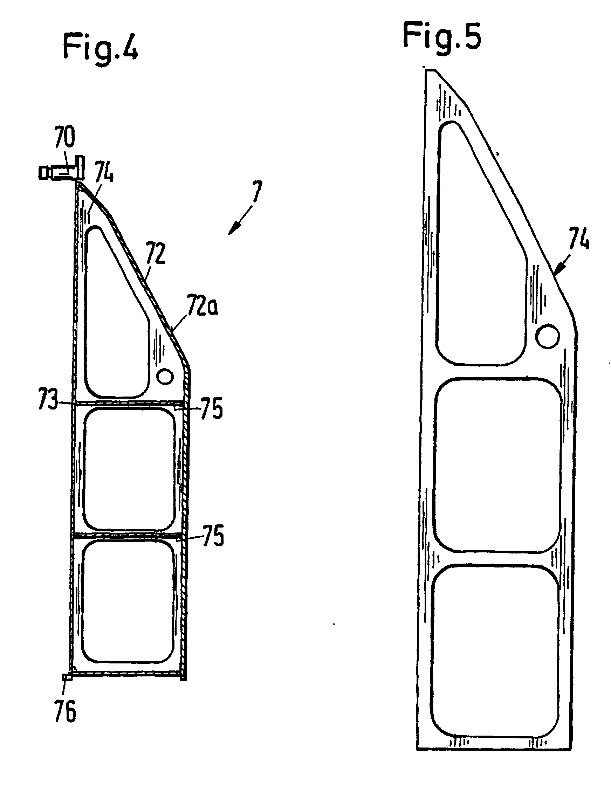

Die beiden Stützelemente 7 werden hingegen an einem feststehenden Teil des Motors befestigt und sind im wesentlichen gleich ausgestaltet. In Fig. 4 ist ein Längsschnitt durch ein solches Stützelement 7 zu erkennen. Das Stützelement 7 umfasst eine Vorderwand 72 mit einer Führungsfläche 72a, auf welcher die Rolle 80 des Schlittens 8 entlanggleitet. Ferner umfasst es eine Rückwand 73 sowie zwei Seitenwände 74, von denen in Fig. 4 nur eine zu erkennen ist, sowie Zwischenböden 75. Am unteren Ende erkennt man noch einen Anschlag 76, der dazu dient, das Stützelement 7 in einer fest vorgegebenen Art und Weise an dem feststehenden Teil des Motors zu befestigen (eben so, dass der Anschlag an einer entsprechenden Anschlagfläche an dem feststehenden Teil des Motors ansteht). Schliesslich erkennt man noch am oberen Ende den bereits früher erwähnten Gewindebolzen 70, der nicht nur zur Befestigung des Stützelements 7 dient, sondern auch als unterer Anschlag für den Führungsschlitten 5 des Kreuzkopf-Gelenks.

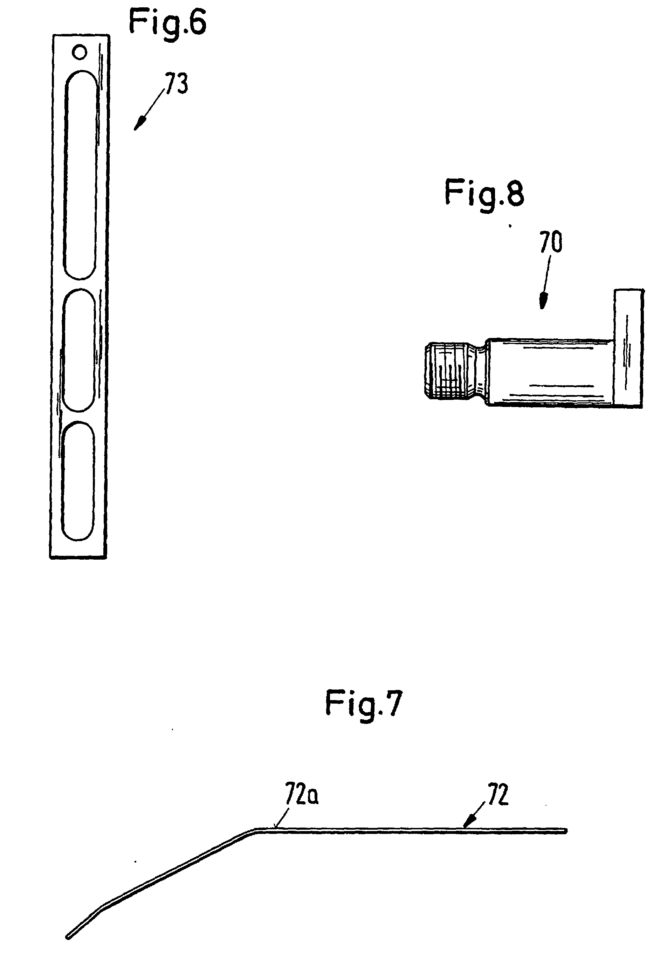

Fig. 5 zeigt eine Ansicht einer Seitenwand 74, Fig. 6 eine Ansicht der Rückwand 73 und Fig. 7 eine Ansicht der Vorderwand 72. Aus Fig. 7 erkennt man auch genauer die Gestalt der Führungsfläche 72a, auf welcher die Rollen 80 des Schlittens 8 entlang rollen. Die Fläche 72a steigt zunächst rampenartig an und mündet danach in ein Plateau. Fig. 8 schliesslich zeigt den Gewindebolzen 70, mit dessen Hilfe das Stützelement 7 an dem feststehenden Teil des Motors (also z.B. am Gehäuse) befestigt wird. Die einzelnen Wände und die Zwischenböden eines Stützelements können alle aus Blech hergestellt und miteinander zu einem Stützelement verschweisst werden. Auch der Bolzen 70 wird vorzugsweise fest mit dem Stützelement 7 verbunden (z.B. kann er ebenfalls verschweisst werden).

## Patentansprüche

1. Verfahren zur Inspektion einer Lagerschale (121), die im Lagerboden (120) eines Kreuzkopf-Gelenks eines Grossdieselmotors angeordnet ist, welches Kreuzkopf-Gelenk die geradlinige Bewegung einer Kolbenstange (4) in eine nicht geradlinige Bewegung einer Schubstange (1) umsetzt, bei welchem Verfahren nach dem Lösen der Verbindung von Lagerdeckel (122) und Lagerboden (120) die Schubstange (1) mitsamt dem Lagerboden (120) von dem Lagerdeckel (122) weg bewegt wird, und bei welchem Verfahren nach dem Wegbewegen der Schubstange (1) und damit des Lagerbodens (120) vom Lagerdeckel (122) die im Lagerboden (120) angeordnete Lagerschale (121) inspiziert wird, **dadurch gekennzeichnet, dass** vor dem Wegbewegen der Schubstange (1) und damit vor dem Wegbewegen des Lagerbodens (120) vom Lagerdeckel (122) an der Schubstange (1) ein Schlitten (8) befestigt wird und an einem feststehenden Teil des Motors Führungsmittel (7) befestigt werden, wobei der Schlitten (8) und die Führungsmittel (7) jeweils so zueinander angeordnet befestigt werden, dass beim Wegbewegen der Schubstange (1) und damit beim Wegbewegen des Lagerbodens (120) vom Lagerdeckel (122) der an der Schubstange (1) befestigte Schlitten (8) sich an den am feststehenden Teil des Motors befestigten Führungsmitteln (7) entlang bewegt und sich auf ihnen abstützt.

2. Verfahren nach Anspruch 1, **dadurch gekennzeichnet, dass** die Verbindung von Lagerdeckel (122) und Lagerboden (120) in der tiefsten Position der Schubstange (1) gelöst wird, dass anschliessend die Schubstange (1) in ihre höchste Position bewegt wird, und dass in dieser höchsten Position der Schubstange (1) die Führungsmittel (7) an dem feststehenden Teil des Motors und der Schlitten (8) an der Schubstange (1) befestigt werden.

3. Verfahren nach einem der Ansprüche 1 oder 2, **dadurch gekennzeichnet, dass** für den Fall, dass bei der Inspektion die Lagerschale (121) als abgenutzt oder defekt eingestuft wird, die Lagerschale ausgetauscht wird.

4. Verfahren zum Ausbau einer Schubstange (1) eines Grossdieselmotors, wobei die Schubstange (1) mittels eines Kreuzkopf-Gelenks mit einer Kolbenstange (4) verbunden ist und das Kreuzkopf-Gelenk eine geradlinige Bewegung der Kolbenstange (4) in eine nicht geradlinige Bewegung der Schubstange (1) umsetzt, und wobei das Kreuzkopf-Gelenk einen Lagerdeckel (122) und einen mit dem Lagerdeckel (122) lösbar verbundenen Lagerboden (120) umfasst, der nach dem Lösen der Verbindung zum Lagerdeckel (122) zusammen mit der Schubstange (1) vom Lagerdeckel (122) weg bewegt wird, **dadurch gekennzeichnet, dass** vor dem Wegbewegen der Schubstange (1) und damit vor dem Wegbewegen des Lagerbodens (120) vom Lagerdeckel (122) an der Schubstange (1) ein Schlitten (8) befestigt wird und an einem feststehenden Teil des Motors Führungsmittel (7) befestigt werden, wobei der Schlitten (8) und die Führungsmittel (7) jeweils so zueinander angeordnet befestigt werden, dass beim Wegbewegen der Schubstange (1) und damit beim Wegbewegen des Lagerbodens (120) vom Lagerdeckel (122) der an der Schubstange befestigte Schlitten (8) sich an den am feststehenden Teil des Motors befestigten Führungsmitteln (7) entlang bewegt und sich dabei auf ihnen abstützt, sodass die Schubstange (1) auf einer definierten Bahn geführt wird, bis das Ende der von den Führungsmitteln definierten Bahn erreicht ist, dass beim Erreichen des Endes dieser Bahn die Bewegung der Schubstange (1) unterbrochen wird und in dieser Position Haltemittel an der Schubstange (1) befestigt werden, dass anschliessend der Schlitten (8) wieder entfernt wird und die Schubstange (1) mit Hilfe der Haltemittel in eine für den Ausbau erforderliche Position abgelassen und ausgebaut wird.

5. Verfahren nach Anspruch 4, **dadurch gekennzeichnet, dass** die Verbindung von Lagerdeckel (122) und Lagerboden (120) in der tiefsten Position der Schubstange (1) gelöst wird, dass anschliessend die Schubstange (1) in ihre höchste Position bewegt wird, und dass in dieser höchsten Position der Schubstange die Führungsmittel (7) an dem feststehenden Teil des Motors und der Schlitten (8) an der Schubstange (1) befestigt werden.

6. Werkzeugsatz für den Einbau in Grossdieselmotoren bei deren Wartung, insbesondere zur Erleichterung der Inspektion einer Lagerschale (121) im Lagerboden (120) eines Kreuzkopf-Gelenks und/oder zur Erleichterung des Ausbaus einer Schubstange (1) des Motors, die mittels des Kreuzkopf-Gelenks mit einer Kolbenstange (4) verbunden ist, wobei das Kreuzkopf-Gelenk die geradlinige Bewegung der Kolbenstange (4) in eine nicht geradlinige Bewegung der Schubstange (1) umsetzt, **dadurch gekennzeichnet, dass** der Werkzeugsatz zwei Führungs- bzw. Stützelemente (7) umfasst, die beim Einbau an einem feststehenden Teil des Motors befestigt werden und jeweils eine rampenartig ansteigende Fläche und eine daran anschliessende Fläche in Form eines Plateaus aufweisen, sowie einen Schlitten (8), der beim Einbau an der Schubstange (1) befestigt wird, wobei die Führungs- bzw. Stützelemente (7) und der Schlitten (8) nach dem Einbau so zueinander angeordnet sind, dass bei gelöster Verbindung von Lagerdeckel (122) und Lagerboden (120) des Kreuzkopf-Gelenks beim Wegbewegen der Schubstange (1) und damit beim Wegbewegen des Lagerbodens (120) vom Lagerdeckel (120) der an der Schubstange (1) befestigte Schlitten (8) sich zunächst entlang der rampenartigen Fläche und anschliessend entlang des Plateaus der Führungs- bzw. Stützelemente (7) bewegt und sich dabei darauf abstützt.

7. Grossdieselmotor mit mindestens einer Kolbenstange (4) , , welche mittels eines Kreuzkopf-Gelenks mit einer Schubstange (1) verbunden ist zum Umsetzen der geradlinigen Bewegung der Kolbenstange (4) in eine nicht geradlinige Bewegung der Schubstange (1), wobei das Kreuzkopf-Gelenk einen Lagerdeckel (122) und einen mit diesem Lagerdeckel lösbar verbundenen Lagerboden (120) aufweist, **dadurch gekennzeichnet, dass** an der Schubstange (1) eine Befestigungseinrichtung für einen Schlitten (8) und an einem feststehenden Teil des Motors Befestigungseinrichtungen für Führungsmittel (7) derart vorgesehen sind, dass nach dem Lösen der Verbindung von Lagerdeckel (122) und Lagerboden (120) und bei befestigtem Schlitten (8) und bei befestigten Führungsmitteln (7) der Schlitten (8) beim Wegbewegen der Schubstange (1) und damit des Lagerbodens (120) vom Lagerdeckel (122) sich an den Führungsmitteln (7) entlang bewegt und sich dabei darauf abstützt.

8. Grossdieselmotor nach Anspruch 7, **dadurch gekennzeichnet, dass** an der Schubstange (1) mindestens eine weitere Einrichtung zum Befestigen von Haltemitteln vorgesehen ist.

## Claims

1. Method for inspecting a bearing shell (121) which is arranged in the bearing base (120) of a cross-head joint of a large diesel engine, said cross-head joint converting the rectilinear movement of a piston rod (4) to a non-rectilinear movement of a thrust rod (1), in which method the thrust rod (1) together with the bearing base (120) is moved away from the bearing cover (122) after the connection between the bearing cover (122) and the bearing base (120) has been released, and in which method the bearing shell (121), which is arranged in the bearing base (120), is inspected after the thrust rod (1) and with it the bearing base (120) has been moved away from the bearing cover (122), **characterised in that** prior to the moving away of the thrust rod (1), and thus prior to the moving away of the bearing base (120) from the bearing cover (122), a carriage (8) is mounted on the thrust rod (1) and guiding means (7) are mounted on a fixed part of the engine, with the carriage (8) and the guiding means (7) being respectively secured and arranged with respect to one another in such a manner that the carriage (8), which is mounted on the thrust rod (1), moves along the guiding means (7), which are mounted on the fixed part of the engine, and is braced thereon when the thrust rod (1) and with it the bearing base (120) is moved away from the bearing cover (122).

2. Method in accordance with claim 1 **characterised in that** the connection between the bearing cover (122) and the bearing base (120) is released at the lowermost position of the thrust rod (1); **in that** the thrust rod (1) is subsequently moved to its uppermost position; and **in that**, at this uppermost position of the thrust rod (1), the guiding means (7) are mounted on the fixed part of the engine and the carriage (8) on the thrust rod (1).

3. Method in accordance with claim 1 or claim 2 **characterised in that** the bearing shell (121) is replaced in the case that the bearing shell is found to be worn or defective during the inspection.

4. Method for removing a thrust rod (1) of a large diesel engine, with the thrust rod (1) being connected by means of a cross-head joint to a piston rod (4) and with the cross-head joint converting a rectilinear movement of a piston rod (4) into a non-rectilinear movement of the thrust rod (1), and with the cross- head joint comprising a bearing cover (122) and a bearing base (120) which is releasably connected to the bearing cover (122) and is moved together with the thrust rod (1) away from the bearing cover (122) after the connection to the bearing cover (122) has been released, **characterised in that** prior to the moving away of the thrust rod (1), and thus prior to the moving away of the bearing base (120) from the bearing cover (122), a carriage (8) is mounted on the thrust rod (1) and guiding means (7) are mounted on a fixed part of the engine, with the carriage (8) and the guiding means (7) in each case being respectively secured and arranged with respect to one another in such a manner that the carriage (8), which is mounted on the thrust rod (1), moves along the guiding means (7), which are secured to the fixed part of the engine, and is supported thereon when the thrust rod (1) and with it the bearing base (120) is moved away from the bearing cover (122) so that the thrust rod (1) is guided along a definite path until the end of the path defined by the guiding means has been reached; **in that** when the end of this path has been reached, the movement of the thrust rod (1) is interrupted and holding means are secured to the thrust rod (1) in this position; and **in that** subsequently the carriage (8) is removed again and the thrust rod (1) is lowered by means of the holding means into a position required for the removal and is removed.

5. Method in accordance with claim 4 **characterised in that** the connection between the bearing cover (122) and the bearing base (120) is released at the lowermost position of the thrust rod (1); **in that** the thrust rod (1) is subsequently moved to its uppermost position; and **in that**, in this uppermost position of the thrust rod (1), the guiding means (7) are mounted on the fixed part of the engine and the carriage (8) is mounted on the thrust rod (1).

6. Tool set to be installed into large diesel engines during their maintenance, in particular for facilitating the inspection of a bearing shell (121) in the bearing base (120) of a cross-head joint and/or for facilitating the removal of a thrust rod (1) of the engine, which is connected by means of the cross- head joint to a piston rod (4), with the cross-head joint converting the rectilinear movement of the piston rod (4) into the non-rectilinear movement of the thrust rod (1), **characterised in that** the tool set comprises two guide and/or support elements (7) which are mounted on a fixed part of the engine during the installation and in each case have a surface rising in the manner of a ramp and a surface adjoining thereto in the form of a plateau, and also a carriage (8) which is secured to the thrust rod (1) during the installation, with the guide and/or support elements (7) and the carriage (8) being arranged with respect to one another after the installation in such a manner that, when the connection between the bearing cover (122) and the bearing base (120) of the cross-head joint has been released, the carriage (8), which is secured to the thrust rod (1), first moves along the ramp-like surface and then along the plateau of the guide and/or support elements (7) and is supported thereon when the thrust rod (1) and with it the bearing base (120) is moved away from the bearing cover (122).

7. Large diesel engine with at least one piston rod (4), which is connected to a thrust rod (1) by means of a cross-head joint for converting the rectilinear movement of the piston rod (4) into a non-rectilinear movement of the thrust rod (1), with the cross-head joint having a bearing cover (122) and a bearing base (120) which is releasably connected to this bearing cover (122), **characterised in that** a securing apparatus for a carriage (8) is provided on the thrust rod (1) and securing apparatuses for guiding means (7) are provided on a fixed part of the engine such that after the connection between the bearing cover (122) and the bearing base (120) has been released, and with the carriage (8) and guiding means (7) being secured, the carriage (8) moves along the guiding means (7) and is supported thereon when the thrust rod (1) and with it the bearing base (120) moves away from the bearing cover (122).

8. Large diesel engine in accordance with claim 7 **characterised in that** at least one further device for the attachment of holding means is provided on the thrust rod (1).

## Revendications

1. Procédé pour l'inspection d'une coque de palier (121) qui est disposée dans le fond de palier (120) d'une articulation de crosse de piston d'un grand moteur diesel, cette articulation de crosse de piston transformant le déplacement rectiligne d'une tige de piston (4) en un déplacement non rectiligne d'une bielle (1), procédé, dans lequel après le relâchement de la liaison du couvercle de palier (122) et du fond de palier (120), la bielle (1) est déplacée conjointement avec le fond de palier (120) au loin du couvercle de palier (122), et dans ce procédé, après avoir éloigné la bielle (1) et par conséquent le fond de palier (120) du couvercle de palier (122), la coque de palier (121) disposée dans le fond de palier (120) est inspectée, **caractérisé en ce qu'**avant l'éloignement de la bielle (1) et donc avant l'éloignement du fond de palier (120) du couvercle de palier (122), un chariot (8) est fixé à la bielle (1) et, à une partie fixe du moteur, des moyens de guidage (7) sont fixés, où le chariot (8) et les moyens de guidage (7) sont fixés respectivement selon une disposition telle les uns relativement aux autres que lors de l'éloignement de la bielle (1) et donc de l'éloignement du fond de palier (120) du couvercle de palier (122), le chariot (8) fixé à la bielle (1) se déplace le long des moyens de guidage (7) fixés à la partie fixe du moteur et s'appuie sur ceux-ci.

2. Procédé selon la revendication 1, **caractérisé en ce que** la liaison du couvercle de palier (122) et du fond de palier (120) est relâchée dans la position la plus basse de la bielle (1), **en ce qu'**ensuite, la bielle (1) est amenée dans sa position la plus haute, et **en ce que** dans cette position la plus haute de la bielle (1), les moyens de guidage (7) sont fixés à la partie fixe du moteur et le chariot (8) à la bielle (1).

3. Procédé selon l'une des revendications 1 ou 2, **caractérisé en ce que** pour le cas où lors de l'inspection, la coque de palier (121) est considérée comme étant usée ou défectueuse, la coque de palier est échangée.

4. Procédé de démontage d'une bielle (1) d'un grand moteur diesel, où la bielle (1) est reliée au moyen d'une articulation de crosse de piston à une tige de piston (4), et l'articulation de crosse de piston transforme un déplacement rectiligne de la tige de piston (4) en un déplacement non rectiligne de la bielle (1), et où l'articulation de crosse de piston comporte un couvercle de palier (122) et un fond de palier (120) relié amoviblement au couvercle de palier (122) qui, après le relâchement de la liaison avec le couvercle de palier (122), est déplacé conjointement avec la bielle (1) au loin du couvercle de palier (122), **caractérisé en ce qu'**avant l'éloignement de la bielle (1) et donc avant l'éloignement du fond de palier (120) du couvercle de palier (122), un chariot (8) est fixé à la bielle (1) et, à une partie fixe du moteur, des moyens de guidage (7) sont fixés, où le chariot (8) et les moyens de guidage (7) sont fixés respectivement en une telle position les uns relativement aux autres que lors de l'éloignement de la bielle (1) et donc de l'éloignement du fond de palier (120) du couvercle de palier (122), le chariot (8) fixé à la bielle se déplace le long des moyens de guidage (7) fixés à la partie fixe du moteur et, ce faisant, s'appuie sur ceux-ci de telle sorte que la bielle (1) est guidée sur une voie définie jusqu'à ce que l'extrémité de la voie définie par les moyens de guidage soit atteinte, **en ce que** lors de l'atteinte de l'extrémité de cette voie, le déplacement de la bielle 1 est interrompu, et dans cette position, des moyens de retenue sont fixés à la bielle (1), **en ce qu'**ensuite le chariot (8) est de nouveau retiré, et la bielle (1) est abaissée à l'aide des moyens de retenue dans une position requise pour le démontage et est démontée.

5. Procédé selon la revendication 4, **caractérisé en ce que** la liaison du couvercle de palier (122) et du fond de palier (120) est relâchée dans la position la plus basse de la bielle (1), **en ce qu'**ensuite la bielle (1) est amenée dans sa position la plus haute et que dans cette position la plus haute de la bielle, les moyens de guidage (7) sont fixés à la partie fixe du moteur et le chariot (8) à la bielle (1).

6. Jeu d'outils pour le montage dans des grands moteurs diesel lors de l'entretien de ceux-ci, notamment pour faciliter l'inspection d'une coque de palier (121) dans le fond de palier (120) d'une articulation de crosse de piston et/ou pour faciliter le démontage d'une bielle (1) du moteur qui est reliée au moyen de l'articulation de crosse de piston à une tige de piston (4), où l'articulation de crosse de piston transforme le mouvement rectiligne de la tige de piston (4) en un mouvement non rectiligne de la bielle (1), **caractérisé en ce que** le jeu d'outils comprend deux éléments de guidage respectivement d'appui (7) qui, lors du montage, sont fixés à une partie fixe du moteur et présentent chacun une face remontant en forme de rampe et une face faisant suite à celle-ci sous la forme d'un plateau, ainsi qu'un chariot (8) qui est fixé lors du montage à la bielle (1), où les éléments de guidage respectivement d'appui (7) et le chariot (8) sont disposés après le montage de telle sorte les uns relativement à l'autre que lors de l'assemblage relâché du couvercle de palier (122) et du fond de palier (120) de l'articulation de crosse de piston, lors de l'éloignement de la bielle (1) et donc lors de l'éloignement du fond de palier (120) du couvercle de palier (122), le chariot (8) fixé à la bielle (1) se déplace d'abord le long de la face en forme de rampe et ensuite le long du plateau des éléments de guidage respectivement d'appui (7) et, ce faisant, s'appuie sur ceux-ci.

7. Grand moteur diesel avec au moins une tige de piston (4) qui est reliée au moyen d'une articulation de crosse de piston à une bielle (1) pour transformer le déplacement rectiligne de la tige de piston (4) en un déplacement non rectiligne de la bielle, où l'articulation de crosse de piston présente un couvercle de palier (122) et un fond de palier (120) relié amoviblement à ce couvercle de palier, **caractérisé en ce que** sont prévus à la bielle (1) une installation de fixation pour un chariot (8) et à une partie fixe du moteur des installations de fixation pour des moyens de guidage (7) de telle sorte qu'après le relâchement de la liaison entre le couvercle de palier (122) et le fond de palier (120) et lors du chariot fixé (8) et des moyens de guidage fixés (7), le chariot (8), lors de l'éloignement de la bielle (1) et donc du fond de palier (120) du couvercle de palier (122), se déplace le long des moyens de guidage (7) et s'appuie sur ceux-ci.

8. Grand moteur diesel selon la revendication 7, **caractérisé en ce qu'**il est prévu à la bielle (1) au moins une installation supplémentaire pour la fixation de moyens de retenue.
